# EUROPÄISCHE PATENTSCHRIFT

(11) **EP 1 878 916 B1**
(45) Veröffentlichungstag und Bekanntmachung des Hinweises auf die Patenterteilung: **12.01.2011**
(21) Anmeldenummer: 06014634.7
(22) Anmeldetag: 14.07.2006
(51) Int. Cl.: F03D 5/00

(54) **Windbetriebener elektrischer Generator**
Wind driven electric generator
Générateur électrique actionné par le vent

(43) Veröffentlichungstag der Anmeldung: 16.01.2008
(73) Patentinhaber: NTS Energie- und Transportsysteme GmbH, 10179 Berlin (DE)
(72) Erfinder: Uwe Ahrens, 10179 Berlin (DE)
(74) Vertreter: von Eichel-Streiber, Caspar

(56) Entgegenhaltungen:
- EP-A1- 0 841 480
- US-A- 3 987 987
- US-A- 4 124 182
- US-A- 5 435 259
- US-A1- 2002 033 019

## Beschreibung

Die Erfindung betrifft ein Verfahren sowie ein System zur Umwandlung von in in natürlich vorkommenden, über einem Grund angelagerten Fluiden auftretenden Horizontalströmungen enthaltener Bewegungsenergie in nutzbare mechanische Energie.

Nahezu überall auf der Erde existieren in den wesentlichen vorkommenden Fluiden (die oberhalb der Erdoberfläche in der Atmosphäre enthaltene Luft, das in Gewässern angesammelte Süß- oder Salzwasser) natürlich vorkommende Horizontalströmungen. Unter Horizontalströmungen werden im Sinne dieser Erfindung solche Strömungen verstanden, die jedenfalls einen horizontalen Anteil besitzen. Beispiele für derartige Strömungen sind Winde in den verschiedenen Atmosphärenschichten bzw. Meeresströmungen oder sonstige Strömungen in Gewässern. Grundsätzlich sind diese Strömungen Speicher von großen Mengen Energie, deren Nutzung vermehrt angestrebt und in verschiedensten Umsetzungen bereits vorgenommen wird. Beispiele von technisch bereits realisierten Nutzungen derartiger Strömungen sind Tidekraftwerke, die den Strom der bei Flut anlaufenden bzw. bei Ebbe ablaufenden Wassermassen ausnutzen, um über Turbinen und daran angeordnete Generatoren Elektrizität zu erzeugen, oder Windkraftanlagen, deren durch über das Land wehenden Wind angetriebene Rotoren Windenergie zunächst in mechanische Energie und über daran angeschlossene Generatoren in elektrische Energie wandeln.

Die Nutzbarmachung der in derartigen Strömungen vorhandenen Energie hat gegenüber der Energiegewinnung aus fossilen Brennstoffen oder über die Nutzung nuklearer Prozesse den Vorteil, dass diese wesentlich umweltfreundlicher ist.

Möglichkeiten der Nutzbarmachung von Strömungsenergie in Winden in großer Höhe bzw. in Luft- oder Wasserströmungen sind in den Dokumenten US 5,435,259 bzw. US 2002/0033019 A1, die als nächstliegender Stand der Technik angesehen wird angegeben.

In dem erstgenannten Dokument wird eine Lösung mit einem lenkbaren Drachen bzw. einer Anordnung solcher Drachen offenbart, wobei die auf dem Drachen bzw. den Drachen lastende Windlast zum Antrieb von Transportmitteln genutzt werden kann. Erwähnt ist auch die Gewinnung elektrischer Energie z.B. über Propeller an den Drachen.

Bei dem in der US 2002/0033019 A1 offenbarten Prinzip wird in einer Strömung ein Widerstandskörper bzw. werden mehrere Widerstandskörper periodisch an einer Halteleine ausfahren gelassen bzw. wieder eingeholt. Durch Veränderung des Querschnittes von groß beim Ausfahren (unter Energieaufnahme aus der Strömung) und klein beim Einfachen (entgegen der Kraft der Strömung unter Energieaufwand) wird von dem System netto ein Energieertrag erzielt, der z.B. in elektrische Energie umgewandelt werden kann.

Mit der Erfindung soll daher ein neuartiges Verfahren zur Nutzbarmachung in strömenden Fluiden enthaltenen Energien angegeben werden. Ferner soll ein System angegeben werden, mit welchem ein solches Verfahren umgesetzt werden kann.

Die Lösung des verfahrenstechnischen Aspektes dieser Aufgabe ist erfindungsgemäß durch ein Verfahren mit den Merkmalen des Patentanspruches 1 alternativ durch ein Verfahren mit den Merkmalen des Patentanspruchs 3 gegeben, den Systemaspekt der Aufgabe lösende Systeme sind alternativ in den Patentansprüchen 6 und 8 angegeben. Vorteilhafte Weiterbildungen der Verfahren sind in den abhängigen Ansprüchen 2, 4 und 5, solche der Systeme in den Ansprüchen 7, 9 und 10 genannt. In den Ansprüchen 11 und 12 sind schließlich erfindungemäße Verwendungen der neuartigen Systeme angegeben.

Die grundsätzliche Erkenntnis, auf der das Verfahren und das System fußen, besteht darin, dass über einem Grund auftretende Horizontalströmungen aufgrund der Reibung gegenüber dem unbewegten Grund in der Nähe des Grundes mit einer gegen null gehenden Geschwindigkeit strömen, mit zunehmenden Abstand vom Grund in der Strömungsgeschwindigkeit zunehmen. Dieses Prinzip gilt sowohl für Luftströmungen wie z.B. die über weite Bereiche der Erdoberfläche in im wesentlichen konstanter Richtung wehenden Kontinentalwinde als auch für Strömungen im Wasser, beispielsweise Meeresströmungen.

Dieses Grundprinzip wird mit der Erfindung in einem ersten Aspekt dadurch ausgenutzt, dass in der Strömung sich bewegende Auftriebskörper, die an einem Umlaufelement über Halteseile bzw. -ketten festgelegt sind, relativ zu dem Grund in unterschiedlichen Höhen eingestellt werden. Dort, wo der Auftriebskörper sich mit der Strömung bewegen soll, wird das Halteseil bzw. die Haltekette entsprechend lang eingestellt, damit der Auftriebskörper in einem hoch über dem Grund liegenden Bereich der Strömung zum liegen kommt, in welchem die Strömungsgeschwindigkeit größer ist als in grundnahen Gebieten. Im Gegenzug wird ein Auftriebskörper, der in dem System gegen die Strömung bewegt werden muss (von dem mindestens einen weiteren Auftriebskörper gezogen werden muss) durch ein entsprechend kürzeres Halteseil bzw. eine solche Haltekette näher an den Grund herangeführt, wo die Strömungsgeschwindigkeit des Fluids geringer ist. Durch die Differenz der an den Auftriebskörpern angreifenden Strömungsgeschwindigkeiten ergibt sich eine resultierende Strömungsgeschwindigkeit, die das System aus Umlaufelement und Auftriebskörpern in einem Umlaufsinn antreibt und somit diesem System nutzbare mechanische Energie zuführt. Wesentliche Voraussetzung dafür ist, dass die Halteseile bzw. -ketten einen deutlich geringeren Angriffsquerschnitt aufweisen als die an ihren freien Enden angeordneten Auftriebskörper.

Wenn nun die Auftriebskörper in Umkehrpunkten des Umlaufelementes angelangt sind (dies sind diejenigen Punkte, in denen in dem System "die Richtung wechselt", d.h. das Umlaufelement quer zu der Strömungsrichtung verläuft, um dann wieder parallel zu der Strömung in entgegen gesetzter Richtung zu verlaufen), so muss die Länge der Halteseile bzw. -ketten entsprechend angepasst werden, damit nun der zuvor entgegen der Strömung laufende, nun in Richtung der Strömung mitgerissene Auftriebskörper in eine weiter vom Grund entfernte Höhenlage entlassen wird, als der zuvor in Richtung der Strömung laufende, nunmehr dieser entgegengesetzt gezogene Auftriebskörper.

Eine weitere Verbesserung des Wirkungsgrades des erfindungsgemäßen Verfahrens bzw. des Systems ergibt sich, wenn die Auftriebskörper mit veränderlichen Angriffsquerschnitten versehen sind. Zum Beispiel können die Auftriebskörper zusätzliche Flächen nach Art von "Segeln" oder "Zugschirmen" aufweisen, die dann eingesetzt werden, wenn der Auftriebskörper sich mit der Horizontalströmung bewegt, oder die Auftriebskörper können in ihrem Querschnitt insgesamt veränderbar aufgebaut sein.

In einem alternativen Aspekt kann grundsätzlich auch nur eine wie oben beschriebene Veränderung des Angriffsquerschnittes ausgenutzt werden, um das Umlaufelement mit den daran an Halteseilen oder -ketten mit vorzugsweise gleichen, jedenfalls gleich bleibenden, Längen angeordneten Auftriebskörpern in eine Umlaufbewegung zu versetzen und so Energie aus der Horizontalströmung umzusetzen.

Der beste Wirkungsgrad wird allerdings bei einer Kombination der beiden oben beschriebenen Maßnahmen, Verstellen der Längen der Halteseile (-ketten) und Verstellen des Angriffsquerschnittes erzielt.

Damit auf einem möglichst langen Abschnitt des Umlaufelementes in der Strömung enthaltene Energie in mechanisch nutzbare Energie umgewandelt werden kann, ist es von Vorteil, wenn das Umlaufelement so ausgelegt ist wie in den Ansprüchen 2 bzw. 5 beschrieben. Auf diese Weise kann in den längeren, im wesentlichen parallel zur Richtung der Horizontalströmung verlaufenden Abschnitten Energie umgesetzt werden, die entlang des Umkehrpunktes verlaufenden Streckenabschnitte, in denen Energie aufgewandt werden muss, um das System umzukehren, sind entsprechend kurz.

Als Auftriebskörper kommen sämtliche Körper in Betracht, die in dem strömenden Fluid einen positiven Auftrieb haben. Im Falle der Luft können dies beispielsweise Luftschiffe, Gasballons oder dgl. sein. Für einen Einsatz in strömendem Wasser kommen gas- bzw. luftgefüllte Ballons oder Bojen in Betracht.

Ein erfindungsgemäßes Verfahren bzw. ein erfindungsgemäßes System, genauer die mit diesen Verfahren bzw. diesen Systemen nutzbar gemachte mechanische Energie kann vielfältig verwendet werden. Zum Beispiel ist es möglich, ein erfindungsgemäßes System zum Transport von Gütern und/oder Personen einzusetzen. Dies bietet sich besonders an, wenn in der Atmosphäre vorherrschende Winde als Horizontalströmung genutzt werden. Hier können dann z.B. Luftschiffe als Auftriebskörper eingesetzt werden, die ausreichend groß und zur Aufnahme von Lasten geeignet sind, als dass sie Container mit Gütern oder Gondeln mit Person aufnehmen können. Diese Art der Nutzung eines erfindungsgemäßen Systems erlaubt jedenfalls einen Transport von Gütern und/oder Personen einer Richtung die im wesentlichen mit bzw. entgegengesetzt der in der Region des Transportes vorherrschenden Hauptwindrichtung ausgerichtet ist. Im Beispiel Nordeuropas wäre wegen der hier überwiegend vorherrschenden Westwinde ein Transport in einer im wesentlichen in Richtung Ost-West verlaufenden Transportrichtung möglich.

Für einen Transport über längere Distanzen kann es von Vorteil sein, wenn ein solches Transportsystem nicht durch ein einziges großes erfindungsgemäßes System realisiert wird, sondern durch eine Mehrzahl von nach Art einer Kette miteinander verschalteten erfindungsgemäßen Systemen. Dabei kann für die konkrete technische Ausgestaltung z.B. auf bekannte Seilbahntechnik zurückgegriffen werden, in welcher bereits Lösungen zum Übergeben von Seilbahngondeln aus einem Seilkreislauf in einen anderen realisiert sind. Auf ähnliche Weise können dann z.B. Halteseile bzw. -ketten mit daran befestigten Auftriebskörpern von einem Umlaufelement an ein weiteres übergeben werden, in dem sie wie in den bekannten Seilbahnsystemen aus einem System ausgeklinkt und in das nächste eingeklinkt werden.

Eine weitere Anwendungsmöglichkeit eines erfindungsgemäßen Systems bzw. eines solchen Verfahrens besteht darin, elektrische Energie zu gewinnen. Hierzu muss lediglich die durch den kontinuierlichen Umlauf des Umlaufelementes bedingte mechanische Energie z.B. über entsprechende Zahnradanbindungen abgegriffen werden, um mit dieser Energie in bekannter Weise Generatoren zu betreiben und die mechanische Energie in elektrische Energie umzuwandeln. Hierbei bietet es sich grundsätzlich an, die durch den Umlauf des Umlaufelementes erhaltene mechanische Energie nur dann in elektrische Energie umzuwandeln, wenn diese nachgefragt ist. In Zeiten mangelnder Nachfrage nach elektrischer Energie (z.B. nachts) ist es aus Sicht der Energiebilanz vorteilhaft, die mechanische Energie in eine andere Art von mechanischer Energie umzuwandeln, da hierbei geringere Verluste entstehen. Zum Beispiel kann die durch den Umlauf des Umlaufelementes gewonnene mechanische Energie genutzt werden, um Wasser oder eine andere Flüssigkeit in hoch gelegenes Reservoirs zu pumpen, wobei die so gewonnene potentielle Energie in Zeiten eines hohen Bedarf an elektrischer Energie in bekannter Weise durch Ablaufenlassen des hoch gepumpten Wassers über Turbinen und Antreiben entsprechender Generatoren wieder in elektrische Energie gewandelt werden kann.

Weitere Vorteile und Merkmale der Erfindung ergeben sich aus der nachfolgenden Beschreibung eines Ausführungsbeispieles anhand der beigefügten Figuren. Dabei zeigen:
- Fig. 1: ein schematisches Diagramm, welches das Verhältnis der Windgeschwindigkeit in Abhängigkeit von der Höhe über Grund zeigt;
- Fig. 2: in einer schematischen Darstellung ein erfindungsge- mäßes System;
- Fig. 3: in schematischer Darstellung ein erfindungsgemäßes System in der Nutzung zum Transport von Gütern;
- Fig. 4: in schematischer Darstellung eine mögliche Erweite- rung eines Auftriebskörpers um ein querschnittsver- größerndes Treibsegel; und
- Fig. 5: schematisch eine weitere Möglichkeit zur dynamischen Veränderung des Angriffsquerschnittes eines Auf- triebskörpers.

In den Figuren ist schematisch ein mögliches Ausführungsbeispiel des erfindungsgemäßen Verfahrens bzw. des erfindungsgemäßen Systems mit einzelnen Untervarianten skizziert.

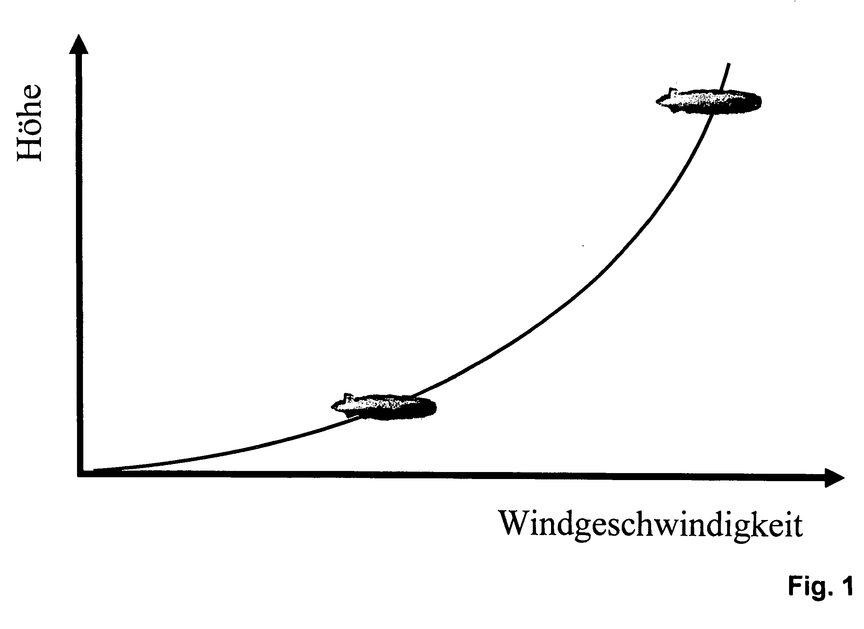

In Fig. 1 ist zunächst anhand des Windes schematisch dargestellt, wie die Windgeschwindigkeit mit der Entfernung vom Boden (Grund) also mit der Höhe zunimmt. Als beispielhafte Auftriebskörper sind hier Luftschiffe auf verschiedenen Höhestufen eingetragen, um zu verdeutlichen, dass diese unterschiedliche Windgeschwindigkeiten erfahren.

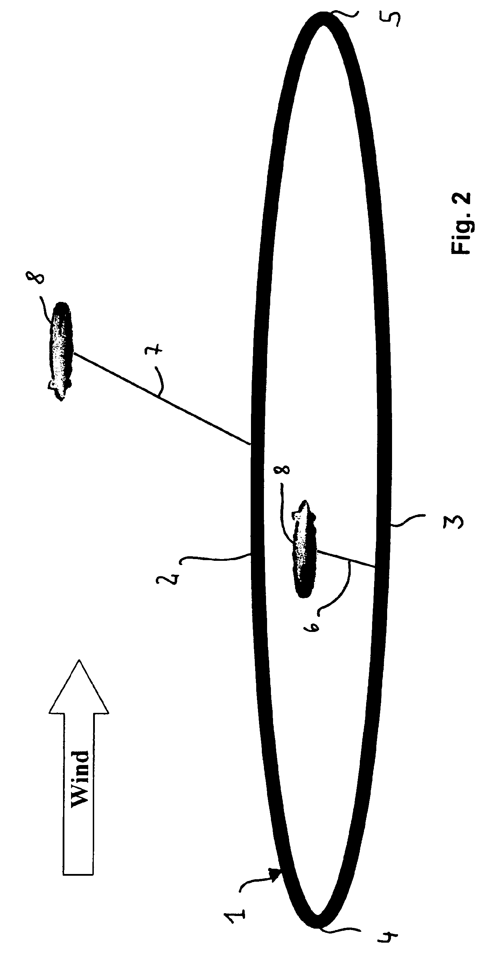

Das sich aus der Darstellung in Fig. 1 ergebende Prinzip benutzt die Erfindung zur Umsetzung von in dem Wind (Luftströmung) enthaltender Bewegungsenergie in nutzbare mechanische Energie. Ein erfindungsgemäßes System für diese Energieumsetzung ist in Fig. 2 schematisch dargestellt. Das System enthält als wesentlichen Bestandteil ein entlang eines geschlossenen Umlaufes geführtes Umlaufelement 1. Dieses Umlaufelement kann z.B. ein umlaufendes, geschlossenes Seil, oder eine solche Kette sein. Das Umlaufelement 1 erstreckt sich, wie in der Fig. dargestellt, mit den wesentlich längeren Abschnitten 2 und 3 parallel bzw. entgegengesetzt der Windrichtung, die in der Figur mit einem Pfeil angedeutet ist. Wesentlich kürzere Abschnitte 4 und 5 des Umlaufelementes 1 erstrecken sich quer zu der Windrichtung und bilden die Umkehrpunkte.

An im wesentlichen einander gegenüberliegenden Positionen sind an dem Umlaufelement 1 Halteseile 6 und 7 befestigt, an deren freien Enden jeweils ein Auftriebskörper in Form eines Luftschiffes 8 festgelegt ist. Die Längen der Halteseile 6, 7 sind verstellbar, und somit der Abstand der Luftschiffe 8 zu dem Umlaufelement 1. Das Umlaufelement 1 ist bevorzugt unmittelbar am Grund, also am Erdboden angebracht, so dass die Länge der Halteseile 6 bzw. 7 den Abstand der Luftschiffe 8 gegenüber dem Boden bestimmt.

Die Halteseile 6, 7 sind mit an dem Umlaufelement 4 angeordneten Vorrichtungen verbunden, die eine Veränderung der Längen der Halteseile 6, 7 ermöglichen. Derartige Vorrichtungen können beispielsweise Seilwinden oder dgl. sein.

Wie in der Figur zu erkennen ist, ist ein in Richtung des Windes fliegendes Luftschiff 8 an dem Halteseil 7 befestigt, welches mit einer längeren Länge eingestellt ist, als das Halteseil 6, welches das entgegen der Windrichtung fliegende Luftschiff 8 trägt. Ein Vergleich mit Fig. 1 lässt erkennen, dass durch diese Einstellung das an dem Halteseil 7 befestigte Luftschiff 8 einer größeren Windgeschwindigkeit ausgesetzt ist als das an dem kürzeren Halteseil 6 befestigte Luftschiff 8. Insoweit greift an dem Luftschiff 8, welches an dem längeren Halteseil 7 festliegt, eine größere Kraft an als an dem an dem kürzeren Halteseil 6 anliegenden Luftschiff 8. Dadurch wird das gesamte System inklusive des Umlaufelementes 1 in einer Drehrichtung im Uhrzeigersinn in Bewegung gesetzt und so mechanische Energie aus der Strömungsenergie des Windes umgesetzt.

Gelangen nun die Luftschiffe 8 an den Umkehrpunkten 4 und 5 des Umlaufelementes 1 an, so wird in dem Umkehrpunkt 4 das Halteseil 6 verlängert, in dem Umkehrpunkt 5 das Halteseil 7 verkürzt. Durch die in dem Umlaufelement 1 durch dessen Bewegung gespeicherte kinetische Energie werden die Luftschiffe 8 über den Umkehrpunkt 4 bzw. 5 hinweg gezogen, und können in der oben geschilderten Weise wieder den Vortrieb des Umlaufelementes 1 besorgen.

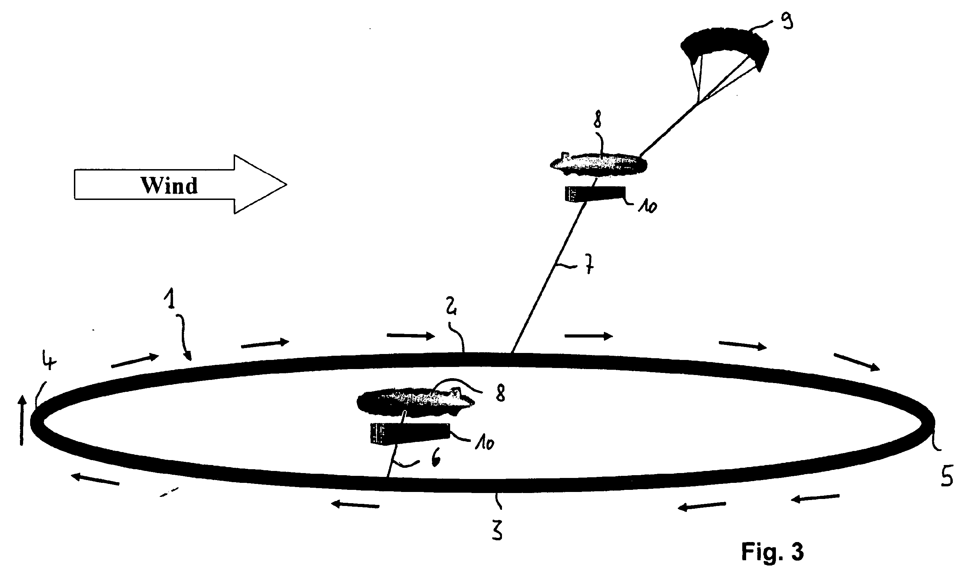

In Fig. 3 ist eine Variante des erfindungsgemäßen Systems schematisch dargestellt, bei der das in größere Höhe mit dem Wind fliegende Luftschiff 8 an dem längeren Halteseil 7 zusätzlich einen Zugschirm 9 einsetzt, um den dem Wind gebotenen Angriffsquerschnitt zu vergrößern und damit eine vermehrte Nutzung der in der Windströmung vorhandenen Energie. Der Zugschirm 9 wird im Umkehrpunkt 5 eingeholt, im Umkehrpunkt 4 bei dem dort angelangten Luftschiff 8 wieder eingesetzt. Auch ist in dieser Figur der Umlaufsinn des Umlaufelementes 1 noch einmal mit Pfeilen angedeutet. Ebenfalls ist in dieser Figur eine mögliche Nutzung des erfindungsgemäßen Systems angedeutet, nämlich die Nutzung zum Transport von Nutzlasten 10. Diese Nutzlasten können z.B. Container mit Gütern, aber auch Gondeln mit Personen oder eine Mischung aus Gütern und Personentransportmitteln sein.

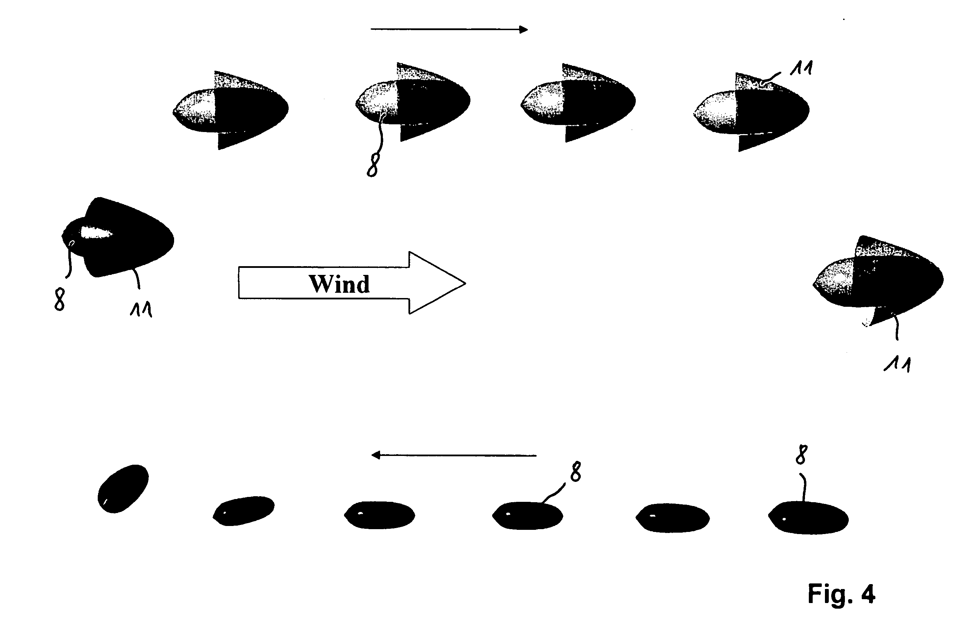

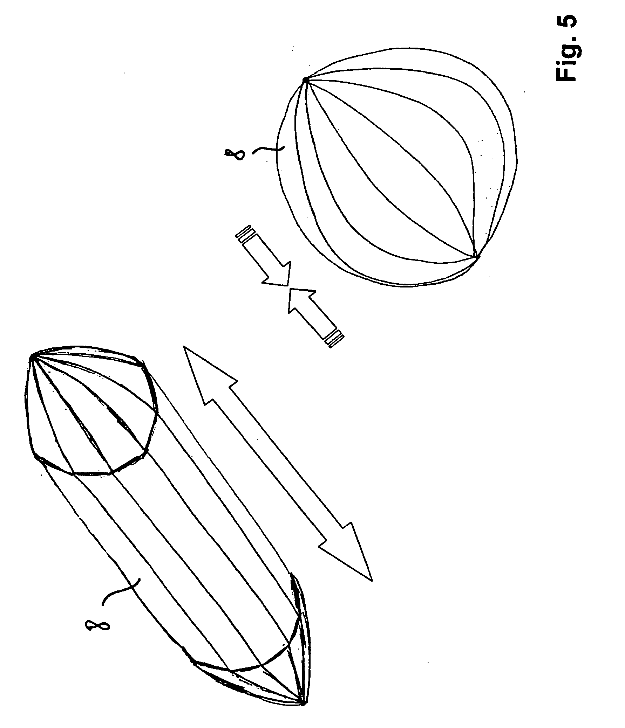

In den Figuren 4 und 5 sind weitere Möglichkeiten zur Veränderung des Angriffsquerschnittes bei den Auftriebskörpern z.B. in Form der Luftschiffe 8 skizziert. Eine Möglichkeit ist in Fig. 4 dargestellt und betrifft die Nutzung eines haubenförmig an der in Fahrtrichtung vorderen Spitze des Luftschiffes 8 angeordneten Luftsegels 11. Dieses ist mit Vorteil so ausgebildet, dass es bei einer Rückenwindsituation durch den angreifenden Wind aufgestellt wird und dann durch die trichter- bzw. pilzförmige Geometrie dem Wind einen deutlich vergrößerten Angriffsquerschnitt bietet. Bei Gegenwind wird das Luftsegel dann automatisch angelegt, so dass das Luftschiff dem Wind insgesamt einen kleineren Angriffsquerschnitt entgegenbringt.

Eine weitere Möglichkeit der Veränderung des Angriffsquerschnittes ist in Fig. 5 skizziert. Durch eine Veränderung der Längenausdehnung des Luftschiffes 8 kann bei geeigneter Konstruktion zugleich eine Änderung des Querschnittes erzielt werden. Wird das Luftschiff 8 in die Länge gezogen, verringert sich der Querschnitt und damit der Angriffsquerschnitt, wird es in seiner Längsrichtung zusammengestaucht, stellt sich der Angriffsquerschnitt ballonartig auf, so dass es von einem angreifenden Luftstrom besser erfasst werden kann.

Das hier skizzierte erfindungsgemäße System bzw. die damit aus einer Strömung (hier einer Luftströmung) umgesetzte mechanische Energie kann, wie z.B. in Fig. 3 dargestellt, zum Transport von Gütern eingesetzt werden, gleichermaßen ist es aber auch denkbar und ein Aspekt der Erfindung, diese Energie weiter umzuwandeln in elektrische Energie, indem mit der erhaltenen mechanischen Energie z.B. Generatoren oder dgl. betrieben werden. Zum Beispiel können auf diese Art und Weise Windkraftanlagen gebaut werden, die anders als die bekannten, stets bodennah aufgebauten Windrotoren keine Abhängigkeit von der bodennah herrschenden Windgeschwindigkeit aufweisen. Typische Betriebshöhen für ein erfindungsgemäßes System in der Atmosphärenluft können Höhen bis in den Bereich von 2.000 bis 3.000 Meter sein, so dass beispielsweise ein an einem längeren Halteseil 7 befestigtes Luftschiff oder ein anderer Auftriebskörper in dieser Höhe schwebt, ein an einem verkürzten Halteseil 6 befestigter, gegen den Wind reisender Auftriebskörper in einer Höhe von einigen hundert Metern. In solchen Höhen herrscht nahezu stets eine nutzbare Windgeschwindigkeit, so dass derartige Kraftwerke nahezu dauernd zuverlässig arbeiten können.

### Bezugszeichenliste

- 1: Umlaufelement
- 2: Abschnitt
- 3: Abschnitt
- 4: Umkehrpunkt
- 5: Umkehrpunkt
- 6: Halteseil
- 7: Halteseil
- 8: Luftschiff
- 9: Zugschirm
- 10: Nutzlast
- 11: Luftsegel

## Patentansprüche

1. Verfahren zur Umwandlung von in in natürlich vorkommenden, über einem Grund angelagerten Fluiden auftretenden Horizontalströmungen enthaltener Bewegungsenergie in nutzbare mechanische Energie, **dadurch gekennzeichnet, dass** wenigstens ein in einem geschlossenen Umlauf geführtes, im wesentlichen horizontal über dem Grund angeordnetes Umlaufelement (1) vorgesehen ist, an welchem an wenigstens zwei einander im wesentlichen gegenüberliegenden Positionen in der Länge verstellbare Halteseile (6, 7) und/oder -ketten mit an deren freien Enden angeordneten, jeweils einen Angriffsquerschnitt für die Strömung aufweisenden Auftriebskörpern (8) befestigt sind, wobei
a) ein an einem in einem Umlaufsinn des Umlaufelementes (1) gesehen in Richtung der Horizontalströmung weisenden Abschnitt (2) des Umlaufelementes festliegendes Halteseil (7) und/oder eine solche Haltekette mit einer größeren Länge eingestellt wird als ein solches Halteseil (6) und/oder eine solche Haltekette, welche(s) an einem in dem Umlaufsinn des Umlaufelementes (1) gesehen entgegen der Richtung der Horizontalströmung weisenden Abschnitt (3) des Umlaufelementes (1) festliegt, und wobei
b) die Längen der Halteseile (6, 7) im Bereich von Umkehrpunkten (4, 5) des Umlaufelementes (1), in welchen in dem Umlaufsinn des Umlaufelementes (4) gesehen sich der Verlauf des Umlaufelementes (4) relativ zu der Horizontalströmung umkehrt, so angepasst werden, dass sie erneut der unter a) aufgezeigten Bedingung genügen.

2. Verfahren nach Anspruch 1, **dadurch gekennzeichnet, dass** der jeweilige Angriffsquerschnitt der Auftriebskörper (8) so verändert wird, dass der Angriffsquerschnitt eines sich in Richtung der Horizontalströmung bewegenden Auftriebskörpers (8) größer ist als der Angriffsquerschnitt eines sich in entgegengesetzter Richtung bewegenden Auftriebskörpers (8).

3. Verfahren zur Umwandlung von in in natürlich vorkommenden, über einem Grund angelagerten Fluiden auftretenden Horizontalströmungen enthaltener Bewegungsenergie in nutzbare mechanische Energie, **dadurch gekennzeichnet, dass** wenigstens ein in einem geschlossenen Umlauf geführtes, im wesentlichen horizontal über dem Grund angeordnetes Umlaufelement (1) vorgesehen ist, an welchem an wenigstens zwei einander im wesentlichen gegenüberliegenden Positionen Halteseile (6, 7) und/oder -ketten mit an deren freien Enden angeordneten, jeweils einen Angriffsquerschnitt für die Strömung aufweisenden Auftriebskörpern (8) befestigt sind, wobei der jeweilige Angriffsquerschnitt der Auftriebskörper (8) so verändert wird, dass der Angriffsquerschnitt eines sich in Richtung der Horizontalströmung bewegenden Auftriebskörpers (8) größer ist als der Angriffsquerschnitt eines sich in entgegengesetzter Richtung bewegenden Auftriebskörpers (8).

4. Verfahren nach Anspruch 3, **dadurch gekennzeichnet dass** die Halteseile (6, 7) und/oder -ketten in der Länge verstellbar sind und dass
a) ein an einem in einem Umlaufsinn des Umlaufelementes (1) gesehen in Richtung der Horizontalströmung weisenden Abschnitt (2) des Umlaufelementes festliegendes Halteseil (7) und/oder eine solche Haltekette mit einer größeren Länge eingestellt wird als ein solches Halteseil (6) und/oder eine solche Haltekette, welche(s) an einem in dem Umlaufsinn des Umlaufelementes (1) gesehen entgegen der Richtung der Horizontalströmung weisenden Abschnitt (3) des Umlaufelementes (1) festliegt, und wobei
b) die Längen der Halteseile (6, 7) im Bereich von Umkehrpunkten (4, 5) des Umlaufelementes (1), in welchen in dem Umlaufsinn des Umlaufelementes (4) gesehen sich der Verlauf des Umlaufelementes (4) relativ zu der Horizontalströmung umkehrt, so angepasst werden, dass sie erneut der unter a) aufgezeigten Bedingung genügen.

5. Verfahren nach einem der vorhergehenden Ansprüche, **dadurch gekennzeichnet, dass** das Umlaufelement (1) so ausgelegt wird, dass seine in Richtung der Horizontalströmung bzw. entgegengesetzt derselben verlaufenden Abschnitte (2, 3) wesentlich länger sind als quer zu der Horizontalströmung weisende Abschnitte.

6. System zur Durchführung eines Verfahrens nach einem der Ansprüche 1 oder 2 mit wenigstens einem in einem geschlossenen Umlauf geführten, im wesentlichen horizontal über dem Grund angeordneten Umlaufelement (1), mit wenigstens zwei an dem Umlaufelement (1) in einander im wesentlichen gegenüberliegenden Positionen angeordneten, in ihrer Länge veränderbaren Halteseilen (6, 7) und/oder -ketten, an deren freien Enden je ein Auftriebskörper (8) mit einem Angriffsquerschnitt für die Horizontalströmung angeordnet ist, und mit Einrichtungen zum Verstellen der Länge der Halteseile (6, 7) und/oder - ketten.

7. System nach einem Anspruch 6, **dadurch gekennzeichnet, dass** die Auftriebskörper (8) in ihren Angriffsquerschnitten veränderlich ausgebildet sind.

8. System zum Durchführen eines Verfahrens nach einem der Ansprüche 3 oder 4 mit wenigstens einem in einem geschlossenen Umlauf geführten, im wesentlichen horizontal über dem Grund angeordneten Umlaufelement (1), mit wenigstens zwei an dem Umlaufelement (1) in einander im wesentlichen gegenüberliegenden Positionen angeordneten, Halteseilen (6, 7) und/oder -ketten, an deren freien Enden je ein Auftriebskörper (8) mit einem Angriffsquerschnitt für die Horizontalströmung angeordnet ist, wobei die Auftriebskörper (8) in ihren Angriffsquerschnitten veränderlich ausgebildet sind.

9. System nach Anspruch 8, **dadurch gekennzeichnet, dass** die Halteseile (6, 7) oder -ketten in der Länge verstellbar sind und dass es Einrichtungen zum Verstellen der Länge der Halteseile (6, 7) und/oder -ketten aufweist.

10. System nach einem der Ansprüche 6 bis 9, **dadurch gekennzeichnet, dass** das Umlaufelement (1) langgestreckt geführt ist, wobei die längeren Abschnitte (2, 3) des Umlaufelementes im wesentlichen parallel zu der Strömungsrichtung der Horizontalströmung ausgerichtet sind, während in Umkehrpunkten (4, 5) gelegene Abschnitte, die quer zu der Strömungsrichtung der Horizontalströmung verlaufen, kurz gehalten sind.

11. Verwendung eines Systems nach einem der Ansprüche 6 bis 10 zum Transport von Gütern und/oder Personen.

12. Verwendung eines Systems nach einem der Ansprüche 6 bis 10 zur Umwandlung der durch die Bewegung des Umlaufelementes erhaltenen mechanischen Energie in elektrische Energie.

## Claims

1. A method for converting the kinetic energy, contained in horizontal currents of naturally occurring fluids that float above ground, into useful mechanical energy, **characterised in that** at least one circulating element (1) is arranged substantially horizontally above the ground and in a closed cycle, on said element at least two traction ropes (6, 7) and/or traction chains of adjustable length are fastened in at least two substantially opposite positions, whereas said ropes or chains have buoyancy bodies, each presenting a cross-section of impact for the current to act upon, wherein a) a traction rope (7) which is fixed to a section (2) of the circulating element (2) facing the direction of the horizontal current when seen in the direction of circulation of the circulating element (1) and/or a traction chain is adjusted to be longer than said traction rope (6) and/or traction chain, which is fixed to a section (3) of the circulating element (1) facing away from the direction of the horizontal current when seen in the direction of circulation of the circulating element (1), and wherein b) the lengths of the traction ropes (6, 7) in the region of the points of return (4, 5) of the circulating element (1) in which the course of the circulating element (4) relative to the horizontal current is reversed, when seen in the direction of circulation of the circulating element (4) are adapted in such a manner that they again meet the meet the conditions mentioned under a).

2. A method according to claim 1, **characterised in that** the respective cross-section of impact of the buoyancy bodies (8) is varied in such a manner that the cross-section of impact of a buoyancy body (8) moving in the direction of the horizontal current is larger than the cross-section of impact of a buoyancy body (8) moving in the opposite direction.

3. A method for converting the kinetic energy, contained in horizontal currents of naturally occurring fluids that float above ground, into useful mechanical energy, **characterised in that** at least one circulating element (1) is arranged substantially horizontally above the ground and in a closed cycle, on said element at least two traction ropes (6, 7) and/or traction chains are fastened at their free ends in at least two substantially opposite positions, whereas said ropes or chains have buoyancy bodies (8), each presenting a cross-section of impact for the current to act upon, wherein the respective cross-section of impact of the buoyancy bodies (8) is varied in such a manner that the cross-section of impact of a buoyancy body (8) moving in the direction of the horizontal current is larger than the cross-section of impact of a buoyancy body (8) moving in the opposite direction.

4. A method according to claim 3, **characterised in that** the traction ropes (6, 7) and/or traction chains are of adjustable length and that a) a traction rope (7) which is fixed to a section (2) of the circulating element (2) facing the direction of the horizontal current when seen in the direction of circulation of the circulating element (1) and/or a traction chain is adjusted to be longer than said traction rope (6) and/or traction chain, which is fixed to a section (3) of the circulating element (1) facing away from the direction of the horizontal current when seen in the direction of circulation of the circulating element (1), and wherein b) the lengths of the traction ropes (6, 7) in the region of the points of return (4, 5) of the circulating element (1) in which the course of the circulating element (4) relative to the horizontal current is reversed, when seen in the direction of circulation of the circulating element (4) are adapted in such a manner that they again meet the meet the conditions mentioned under a).

5. A method according to any of the preceding claims, **characterised in that** the circulating element is arranged in such a manner that its sections (2, 3) circulating in the direction of the horizontal current or in the opposite direction thereof are significantly longer than crosswise to the section facing the horizontal current.

6. A system for implementation of a method according to one of the claims 1 or 2 with at least one circulating element (1) arranged substantially horizontally above ground, in a closed cycle with at least two traction ropes (6, 7) and/or traction chains of adjustable length are arranged at the level of the circulating element in substantially opposite Positions, whereas a buoyancy body (8) is provided at their free ends with a cross-section of impact for the horizontal current to act upon, and with devices for adjusting the length of the traction ropes (6, 7) and/or traction chains.

7. A system according to claim 6, **characterised in that** the cross-sections of impact of the buoyancy bodies (8) can be varied.

8. A system for implementation of a method according to one of the claims 3 or 4 with at least one circulating element (1) arranged substantially horizontally above ground, in a closed cycle, with at least two traction ropes (6, 7) and/or traction chains in substantially opposite Positions, whereas a buoyancy body (8) is provided at their free ends with a cross-section of impact for the horizontal current to act upon, wherein the cross-sections of impact of the buoyancy bodies (8) can be varied.

9. A system according to claim 8, **characterised in that** the traction ropes (6, 7) or traction chains are adjustable in length and **in that** said system includes devices for adjusting the length of the tractions ropes (6, 7) or traction chains.

10. A system according to one of the claims 6 to 9, **characterised in that** the circulating element (1) extends longitudinally, whereas the longer sections (2, 3) of the circulating element are arranged substantially parallel to the flow direction of the horizontal current, while the sections situated in the points of return (4, 5) running crosswise to the flow direction of the horizontal current, are kept short.

11. An application of a system according to one of the claims 6 to 10 for the transport of goods and/or persons.

12. An application of a system according to one of the claims 6 to 10 for converting the mechanical energy obtained by the movement of the circulating element into electric energy.

## Revendications

1. Procédé de conversion de l'énergie cinétique contenue dans les courants horizontaux de fluides présents à l'état naturel et flottant au-dessus du sol, en énergie mécanique utile, caratérisé en ce qu'au moins un élément circulant (1) est disposé sensiblement horizontalement au-dessus du sol et en cycle fermé, ledit élément comportant au moins deux câbles de traction(6, 7) et/ou chaînes de traction de longueur réglable fixées dans deux positions sensiblement opposées, où lesdits câbles ou chaînes présentent des corps de flottaison, comportant chacun une partie transversale d'impact permettant l'action du courant, dans lequel a) un câble de traction (7) fixé à une partie (2) de l'élément circulant (2) faisant face à la direction du courant horizontal vu dans le sens de circulation de l'élément circulant (1) et/ou une chaîne de traction est réglé pour dépasser en longueur ledit câble de traction (6) et/ou la chaîne de traction, qui est fixée à une partie (3) de l'élément circulant (1) tournant le dos à la direction du courant horizontal vu dans le sens de circulation de l'élément circulant (1), et dans lequel b) la longueur des câbles de traction(6, 7) dans la zone des points de retour (4, 5) de l'élément circulant (1) dans laquelle la trajectoire de l'élément circulant (4) par rapport au courant horizontal est inversée, vu dans le sens de circulation de l'élément circulant (4) est adaptée pour de nouveau satisfaire aux conditions mentionnées en a).

2. Procédé selon la revendication 1, **caractérisé en ce que** la partie transversale d'impact respective du corps de flottaison (8) varie de telle sorte que la partie transversale d'impact d'un corps de flottaison (8) se déplaçant dans la direction du courant horizontal est supérieure à la partie transversale d'impact d'un corps de flottaison (8) se déplaçant dans la direction opposée.

3. Procédé de conversion de l'énergie cinétique contenue dans les courants horizontaux de fluides présent à l'état naturel et flottant au-dessus du sol, en énergie mécanique utile, caratérisé en ce qu'au moins un élément circulant (1) est disposé sensiblement horizontalement au-dessus du sol et en cycle fermé, ledit élément comportant au moins deux câbles de traction(6, 7) et/ou chaînes de traction fixés au niveau de leurs extrémités libres en au moins deux positions sensiblement opposées, où lesdits câbles ou chaînes présentent des corps de flottaison (8), comportant chacun une partie transversale d'impact permettant l'action du courant, où la partie transversale d'impact respective du corps de flottaison (8) varie de telle sorte que la partie transversale d'impact d'un corps de flottaison (8) se déplaçant dans la direction du courant horizontal est supérieure à la partie transversale d'impact d'un corps de flottaison (8) se déplaçant dans la direction opposée.

4. Procédé selon la revendication 3, **caractérisé en ce que** les câbles de traction(6, 7) et/ou chaînes de traction sont de longueur réglable et que a) un câble de traction (7) fixé à une partie (2) de l'élément circulant (2) faisant face à la direction du courant horizontal vu dans le sens de circulation de l'élément circulant (1) et/ou une chaîne de traction est réglé pour dépasser en longueur ledit câble de traction (6) et/ou ladite chaîne de traction, fixée à une partie (3) de l'élément circulant (1) tournant le dos à la direction du courant horizontal vu dans le sens de circulation de l'élément circulant (1), et dans lequel b) la longueur des câbles de traction(6, 7) dans la zone des points de retour (4, 5) de l'élément circulant (1) dans laquelle la trajectoire de l'élément circulant (4) par rapport au courant horizontal est inversée, vu dans le sens de circulation de l'élément circulant (4) est adaptée pour de nouveau satisfaire aux conditions mentionnées en a).

5. Procédé selon l'une des revendications précédentes, **caractérisé en ce que** l'élément circulant est disposé de telle sorte que ses parties (2, 3) circulant dans la direction du courant horizontal ou dans la direction opposée sont nettement plus longues que perpendiculairement à la partie faisant face au courant horizontal.

6. Système de mise en oeuvre d'un procédé selon l'une des revendications 1 ou 2 avec au moins un élément circulant (1) disposé sensiblement horizontalement au-dessus du sol, en cycle fermé avec au moins deux câbles de traction (6, 7) et/ou chaînes de traction de longueur réglable disposés au niveau de l'élément circulant dans des positions sensiblement opposées, un corps de flottaison (8) étant prévu au niveau de leurs extrémités libres avec une partie transversale d'impact permettant l'action du courant horizontal, et possédant des dispositifs de réglage de la longueur des câbles de traction (6, 7) et/ou des chaînes de traction.

7. Système selon la revendication 6, **caractérisé en ce que** l'on peut modifier la position des parties transversales d'impact du corps de flottaison (8).

8. Système de mise en oeuvre d'un procédé selon l'une des revendications 3 ou 4 avec au moins un élément circulant (1) disposé sensiblement horizontalement au-dessus du sol, en cycle fermé, avec au moins deux câbles de traction (6, 7) et/ou chaînes de traction dans des positions sensiblement opposées, un corps de flottaison (8) étant prévu au niveau de leurs extrémités libres avec une partie transversale d'impact permettant l'action du courant horizontal, où l'on peut modifier la position des parties transversales d'impact du corps de flottaison (8).

9. Système selon la revendication 8, **caractérisé en ce que** les câbles de traction (6, 7) or chaînes de tractions sont réglables en longueur **en ce que** ledit système comprend des dispositifs de réglage de la longueur des câbles de traction (6, 7) ou des chaînes de traction.

10. Système selon l'une des revendications 6 à 9, **caractérisé en ce que** l'élément circulant (1) s'étend longitudinalement, où les longues parties (2, 3) de l'élément circulant sont sensiblement parallèles au sens d'écoulement du courant horizontal, tandis que les parties situées dans les points de retour (4, 5) transversaux au sens d'écoulement du courant horizontal, sont volontairement courtes.

11. Application d'un système selon l'une des revendications 6 à 10 pour le transport de marchandises et/ou de personnes.

12. Application d'un système selon l'une des revendications 6 à 10 permettant de convertir l'énergie mécanique obtenue par le mouvement de l'élément circulant en énergie électrique.
